Europäisches Patentamt

European Patent Office

Office européen des brevets

(11) Publication number: **0 336 752**
**A2**

# EUROPEAN PATENT APPLICATION

(21) Application number: **89303400.9**

(22) Date of filing: **06.04.89**

(51) Int. Cl.⁴: **H 04 N 1/04**
**H 04 N 1/10**

(30) Priority: **07.04.88 GB 8808095**

(43) Date of publication of application:
**11.10.89 Bulletin 89/41**

(84) Designated Contracting States:
**AT BE CH DE ES FR GR IT LI LU NL SE**

(71) Applicant: **PARKFIELD GROUP PLC**
**Longdene House**
**Haslemere Surrey GU27 2PH (GB)**

(72) Inventor: **Hillen, Sean**
**21 Hayles Buildings Elliott's Row**
**London SE11 4TB (GB)**

(74) Representative: **Cooke, William Douglas et al**
**Hughes Clark & Co. P.O. Box 22 63 Lincoln's Inn Fields**
**London WC2A 3JU (GB)**

(54) Improvements in and relating to a method of and apparatus for producing an enlargement of a visual representation.

(57) An apparatus for producing an enlargement of a visual representation is described comprising a head (3) provided with light sensing means (5) for incident thereon and means for depositing an amount of ink (6) on a surface (2) and control means for controlling the amount of ink (6) deposited by the means in dependence on the intensity of the light sensed by the light sensing means (5).

The invention also extends to a method of producing an enlargement of a visual representation using the apparatus of the invention. The means for depositing the ink may be, for example, an ink jet (6) or an air brush.

FIG.1.

Bundesdruckerei Berlin

## Description

## IMPROVEMENTS IN AND RELATING TO A METHOD OF AND APPARATUS FOR PRODUCING AN ENLARGEMENT OF A VISUAL REPRESENTATION

The present invention relates to apparatus for and a method of producing an enlargement of a visual representation.

According to one aspect of the present invention, the apparatus comprises a head provided with light sensing means for sensing the intensity of light incident thereon and means for depositing an amount of ink on a surface, and control means for controlling the amount of ink deposited by the means in dependence on the intensity of the light sensed by the light sensor means.

The term "ink" used hereinbefore and hereafter is used to mean any suitable colouring material, which may be translucent but is preferably opaque.

According to another aspect of the present invention there is provided a method of producing an enlargement of a visual representation comprising optically projecting an enlarged image of the representation onto a surface on which the enlargement of the representation is to be produced, moving the above described head over the surface and causing the sensor means to sense the intensity of light incident thereon and the means to deposit an amount of ink on the surface corresponding to the intensity of the light sensed. Preferably, the means for depositing an amount of ink on a surface is an ink jet.

In use, the head may be mounted on support means to be automatically moved across the surface and the control means may be arranged to control operation of the sensor in conjunction with operation of drive means for moving the head relative to the support means.

Alternatively, the head may be adapted to be moved by hand across the surface and may then include means for supporting the head on the surface, such for example as wheels or gliders, and may be provided with manually operable means for operating the sensor means and ink jet means.

The sensor means may comprise an array of sensors with a corresponding array of ink jet means and the or each sensor may be sensitive to colour (wavelength) as well as intensity, the ink jet means being supplied with a plurality of differently coloured inks for depositing a corresponding coloured ink to produce a coloured enlargement of a coloured representation.

Further features and advantages of the present invention will become apparent from the following description of embodiments thereof, given by way of example only, with reference to the accompanying drawings, in which:

Figure 1 shows an embodiment of apparatus according to the present invention for carrying out an embodiment of a method according to the present invention;

Figure 2 is an elevation of part of the apparatus of Figure 1;

Figure 3 is a section of the line III-III of Figure 2;

Figure 4 is a view in the direction of the arrow IV of Figure 2.

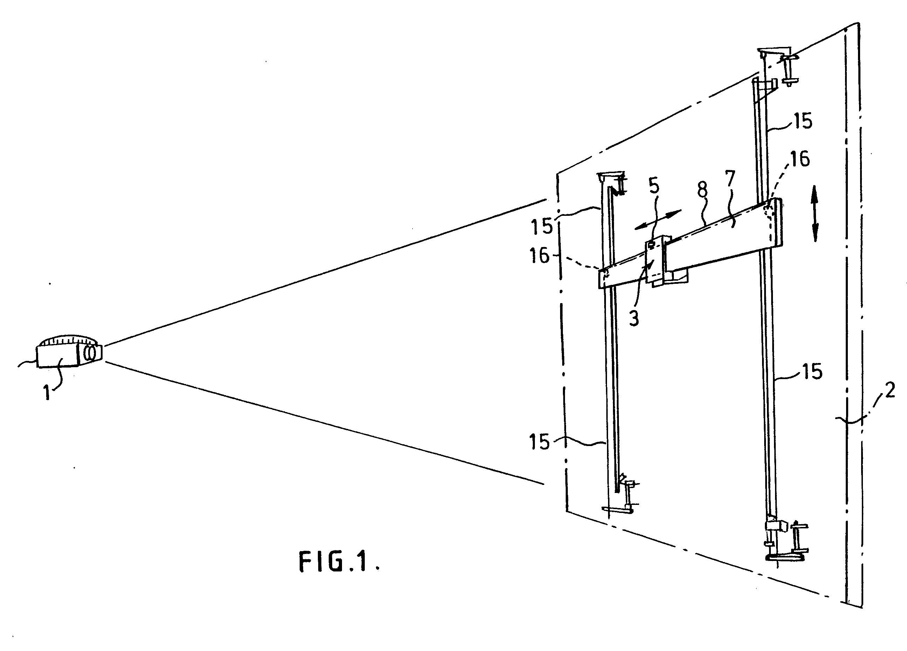

Figure 1 shows apparatus for producing an enlargement of a visual representation, which may for example be in the form of an opaque picture or a transparency. The apparatus comprises an optical projector 1 which enlarges the representation and projects it onto a surface 2 on which the enlargement is to be produced. The surface 2 may be the surface of a piece of sheet material mounted on a support or may be the surface of a more permanent structure such for example as a wall. The projector is focused on a plane just in front of the surface 2 in which a head 3 for translating the projected image into a printed enlargement moves. As shown the plane is vertical but it will be appreciated that it may be horizontal or indeed have any other orientation.

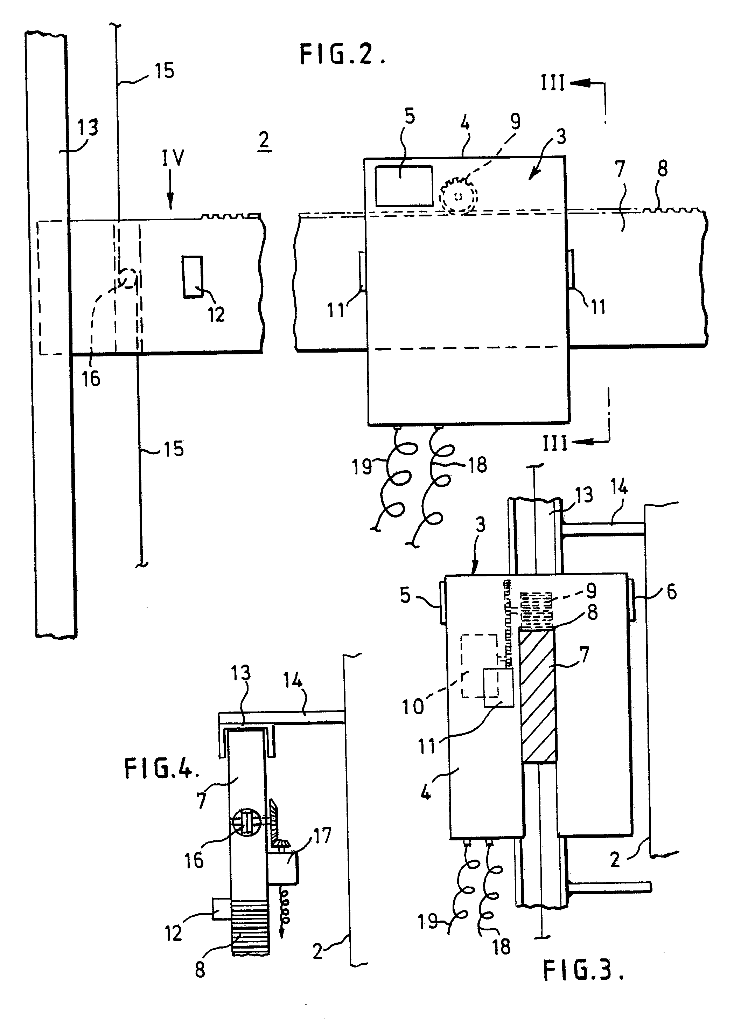

The head 3, which is also shown in Figures 2 to 4, comprises a housing 4 carrying on one face sensor means 5 for sensing the intensity of light incident thereon and on an opposite face ink jet means 6 for depositing on surface 2 a quantity of ink corresponding to the intensity of light or colour of light sensed by the sensor means.

The sensor means may comprise a plurality of sensors and the ink jet means 6 may comprise a corresponding plurality of ink jets for depositing quantities of inks corresponding to the intensity of the incident light sensed. The or each sensor may be sensitive to light intensity only for producing a monochrome enlargement or may also be sensitive to colour, the or each ink jet producing a correspondingly coloured ink, for producing a coloured representation.

The head may be used under circumstances where ambient light in excluded so that the light incident on the sensor comprises only light from the projector. Generally, however, there will be background ambient light. If the background light has a constant intensity, the sensor means can be set to discount it. Alternatively, particularly for use where the background light varies in either colour or intensity or both during the period of use of the head, the light from the projector may be modulated and the sensor means is then set to be sensitive only to the modulated light.

As shown in the drawings, the head 3 is designed and arranged to be moved automatically across the surface 2. As shown it is mounted on a support rail 7 extending across surface 2 and for movement along the rail 7. The rail 7 is itself mounted on or supported by lateral supports 8 extending perpendicularly to rail 7 and across surface 2. Conveniently motors are provided for moving the head 3 on the rail 7 and the rail 7 on supports 8.

In one embodiment shown in the drawings, rail 7 is provided along its upper edge with a rack 8 which is engaged by a pinion 9 mounted in housing 4 and driven through gears by a motor 10 also mounted on or in casing 4.

Control means for controlling operation of the sensor means 5 in relation to the ink jet means 6 are also mounted in casing 4 and these control means also control operation of motor 10 to cause the head 3 to move along the rail.

The head 3 may also be provided with end-of-travel sensors 11 which, at the end of traverse of the rail 7 by the head 3 sense a corresponding stop 12, one of which is provided at each end of the rail 7. The stops 12 may conveniently be adjustable in position depending on the lateral extent of the enlargement to be produced. Sensing of a stop 12 by a sensor 11 initiates movement of the rail in a direction perpendicular to its extent by one step and initiates return movement of the head 3 along the rail. Where there is an appreciable delay between operation of the sensor and corresponding operation of the ink jet means, the head 3 can only operate in one direction of movement along the rail and therefore, while the rail is being moved by one step, the head would, under those circumstances, be returned to its initial position on the rail for movement back along the rail when the rail has achieved its new position.

In this embodiment, the ends of the rail 7 are received and guided by generally U-shaped lateral guides 13 which are mounted on surface 2 or the support for surface 2 by mounting means 14 to ensure a constant spacing between head 3 and surface 2. The rail 7 is supported at each end by tensioned cables 15 which extend round pulleys 16 mounted in the rail, the pulleys 16 being driven through gearing by motors 17 mounted on the rail 7. Alternatively, where for example the plane of operation of the head 3 is horizontal, the rail 7 may be provided at each end with pinions engaging racks on laterally extending support rails, the pinions being driven by motors mounted on the rail.

Advantageously, the motors 17 are controlled by the control means provided in head 3 so that only the head 3 requires a supply of power and a supply of ink and propellant for the ink jet means. The power, ink and propellant may be supplied through connections such as 18, 19. Alternatively, the head 3 may carry its own power supply, e.g. in the form of batteries, together with reservoirs of ink and propellant.

In an alternative arrangement, the head 3 may be arranged to be moved and operated manually. To this end, the housing 4 may be provided with wheels or gliders for contacting the surface 2 on which the enlargement is to be produced, and a manually operable control button or switch for initiating operation of the sensors 5 and consequential operation of the ink jet means 6.

Although the means of depositing the ink has been described as an ink jet, the colouring means may be any pigment deposited, for example, by an air brush.

In another arrangement the control means for depositing an amount of ink on the surface is an optical means which reads the intensity of light reflected from the surface at the point at which the ink is being deposited.

## Claims

1. An apparatus for producing an enlargement of a visual representation, comprising a head (3) provided with light sensing means (5) for sensing the intensity of light incident thereon, and ink jet means (6) for depositing an amount of ink on a surface (2), and control means for controlling the amount of ink deposited by the means (6) in dependence on the intensity of the light sensed by the light sensing means (5).

2. An apparatus as claimed in Claim 1, characterised in that the means for depositing an amount of ink on a surface is an ink jet.

3. An apparatus as claimed in Claim 1 or 2 characterised in that the head (3) is mounted on support means (7) to be automatically moved across the surface (2) and the control means is arranged to control operation of the sensor (5) in conjunction with operation of drive means (8, 9, 10) for moving the head (3) relative to the support means (7).

4. An apparatus as claimed in Claim 1 or 2 characterised in that the head (3) is adapted to be moved manually across the surface (2) and includes means (7, 13, 14) for supporting the head (3) on the surface (2).

5. An apparatus as claimed in any preceding claim, characterised in that manually operable means are provided to operate the sensing means (5) and the ink jet means (6).

6. An apparatus as claimed in any preceding claim, characterised in that the means for supporting the head (3) on the surface (2) is a plurality of wheels.

7. An apparatus as claimed in any of Claims 1 to 5 characterised in that the means for supporting the head (3) on the surface (2) is a plurality of gliders.

8. An apparatus as claimed in any preceding Claim characterised in that the sensing means (5) comprises an array of sensors with a corresponding array of ink jet means.

9. An apparatus as claimed in Claim 8, characterised in that, the or each sensor is sensitive to colour wavelengths as well as intensity, the ink jet means being supplied with a plurality differently coloured inks for depositing a corresponding coloured ink to produce a coloured enlargement of a coloured representation.

10. An apparatus as claimed in any of Claims 1 to 9, wherein the control means for depositing an amount of ink on the surface is an optical means which reads the intensity of light reflected from the surface at the point at which the ink is being deposited.

11. A method of producing an enlargement of a visual representation using the apparatus as claimed in any preceding claim, comprising optically projecting an enlarged image of the representation onto a surface (2) on which the enlargement of the representation is to be produced, moving the head (3) over the surface (2), and causing the sensing means (5) to sense the intensity of light incident thereon and the ink jet means to deposit an amount of ink on the surface corresponding to the intensity of the light sensed.

FIG.1.

EP 0 336 752 A2

EP 0 336 752 A2

FIG.2.

FIG.4.

FIG.3.